**Europäisches Patentamt**

**European Patent Office**

**Office européen des brevets**

(11) Veröffentlichungsnummer: **0 560 065 A1**

# (12) EUROPÄISCHE PATENTANMELDUNG

(21) Anmeldenummer: **93101984.8**

(22) Anmeldetag: **09.02.93**

(51) Int. Cl.5: **B23F 23/12**, B23F 5/08

(30) Priorität: **13.03.92 DE 4208046**

(43) Veröffentlichungstag der Anmeldung:
**15.09.93 Patentblatt 93/37**

(84) Benannte Vertragsstaaten:
**CH DE IT LI**

(71) Anmelder: **BHS-Höfler Maschinenbau GmbH**
**Industriestrasse 19**
**D-76275 Ettlingen(DE)**

(72) Erfinder: **Kiess, Werner, Dr.-Ing.**
**Am Pfarrgarten 6**
**W-7513 Stutensee 1(DE)**

(74) Vertreter: **Brommer, Hans Joachim, Dr.-Ing.**
**Patentanwälte Dipl.-Ing. R. Lemcke Dr.-Ing.**
**H.J. Brommer, Postfach 40 26**
**D-76025 Karlsruhe (DE)**

(54) **Vorrichtung zum Bearbeiten von Stirn- oder Kegel-Zahnrädern.**

(57) Die Erfindung betrifft eine Vorrichtung zum wahlweisen Bearbeiten von Stirn- oder Kegel-Zahnrädern mit einem das Zahnrad (1) tragenden Werkstücktisch (8), der die Wälzbewegung durchführt, während ein das Werkzeug (11) tragender Schlitten (12) Hubbewegungen entlang den Zahnflanken ausführt. Das wesentliche der Erfindung besteht darin, daß der Werkstücktisch (8) eine winkeleinstellbare Aufnahme (2,5b,10) für das Zahnrad (1) aufweist, so daß die Zahnradachse um einen gewünschten Kegelwinkel ($\gamma$) aus der Flucht mit der Werkstück- Tischachse herausschwenkbar ist.

Fig. 2

Die Erfindung betrifft eine Vorrichtung zum wahlweisen Bearbeiten von Stirn- oder Kegel-Zahnrädern mit einem das Zahnrad tragenden Werkstücktisch, der neben einer Drehbewegung eine translatorische hin und hergehende Bewegung durchführt und mit einem das Werkzeug tragenden Schlitten, der Hubbewegungen entlang den Zahnflanken des Zahnrades durchführt.

Derartige Maschinen sind in Form von Zahnflanken-Schleifmaschinen bekannt. Sie arbeiten vorzugsweise im Teilwälzverfahren mit einer Doppelkegelscheibe. Bei der Herstellung von Stirn-Zahnrädern führt der Schleifschlitten eine Hubbewegung parallel zur Zahnradachse durch, wogegen bei der Herstellung von Kegelrädern entweder die Hubebene des Schleifschlittens entsprechend dem Kegelwinkel geneigt wird oder man überlagert dem Schleifschlitten während der Hubbewegung eine radiale Bewegung, die durch eine Schablone oder CNC-Steuerung erzeugt wird. In beiden Fällen führt das Werkzeug also eine Hubbewegung schräg zur Zahnradachse durch, während die Zahnradachse mit der Achse des sie tragenden Drehtisches fluchtet.

Untersuchungen der Anmelderin haben ergeben, daß eine geometrisch exakte Herstellung von Kegelrädern auf diese Weise nicht möglich ist, denn die Schrägstellung des Werkzeuges ändert nichts daran, daß seine Bewegung einen Erzeugungs-Wälzzylinder repräsentiert, bei dem der Grundkreis der Evolvente gleich bleibt. Man erhält somit nur eine Stirnradverzahnung mit einer sich über die Zahnbreite stetig ändernden Profilverschiebung.

Hiervon ausgehend liegt die Aufgabe der vorliegenden Erfindung darin, eine Bearbeitungsmaschine anzugeben, die einerseits optimal zum Bearbeiten von Stirn-Zahnrädern geeignet ist, andererseits aber durch einfache, kostengünstige Maßnahmen eine wesentlich genauere Herstellung von Kegel-Zahnrädern gestattet als dies bei den bisher bekannten kombinierten Maschinen möglich ist. In Weiterbildung der Erfindung soll auch eine geometrisch exakte Kegelradverzahnung realisierbar sein.

Diese Aufgabe wird erfindungsgemäß dadurch gelöst, daß der Werkstücktisch eine winkeleinstellbare Aufnahme für das Zahnrad aufweist, derart, daß die Zahnradachse um einen gewünschten Kegelwinkel aus der Flucht mit der Werkstück-Tischachse herausschwenkbar und in dieser herausgeschwenkten Position feststellbar ist.

Die Erfindung beruht auf der Erkenntnis, daß die gegenüber der Tischachse schräg stehende Zahnrad-Drehachse eine Verzahnung mit über die Zahnbreite sich ständig ändernden Grundkreisen ergibt, wie dies bei Kegelverzahnungen der Fall sein soll, und daß dabei die Relativbewegung zwischen Werkzeug und Zahnrad so erfolgt, daß sie nicht mehr einem Wälzzylinder, sondern dem gewünschten Erzeugungs-Wälzkegel entspricht.

Man erhält dadurch eine wesentlich präzisere Verzahnungsgeometrie und es lassen sich nunmehr auch Kegelwinkel deutlich über 10° realisieren.

Ein weiterer Vorteil der Erfindung besteht darin, daß die bisher notwendigen Schablonen oder die numerische Bahnsteuerung für den schrägen Bewegungsverlauf des Werkzeugschlittens entfallen. Darüber hinaus eröffnet dies die Möglichkeit, mit größeren Hubgeschwindigkeiten als bisher zu arbeiten.

Für den Fachmann bieten sich verschiedene Möglichkeiten, um die Drehbewegung des Werkstücktisches auf die ihm gegenüber winkeleinstellbare Aufnahme für das Zahnrad zu übertragen. Grundsätzlich kommen hierfür Gleichgang-Gelenke in Betracht, die jede Verdrehung winkelgetreu, also mit konstantem Übersetzungsverhältnis übertragen. Derartige Gelenke sind jedoch wegen Ihres Platzbedarfes und ihres elastischen Verhaltens in Umfangsrichtung problematisch. Besonders zweckmäßig ist es daher, ein relativ einfaches, platzsparendes Gelenk zu verwenden, das zwar mit ungleichmäßiger Bewegungsübertragung behaftet ist, diese Ungleichförmigkeiten aber durch eine CNC-Steuerung des Werkstücktisch- Antriebes zu kompensieren. In diesem Fall kann das Gelenk dadurch gebildet sein, daß am Werkstücktisch nach oben vorstehende Kugeln angeordnet sind, die in passende Axialnuten der darüber befindlichen Aufnahme hineinragen.

Im allgemeinen ist die Aufnahme mit einem das Zahnrad durchquerenden Dorn versehen, der an seinen beiden Enden eingespannt ist. In diesem Fall empfiehlt es sich, daß die eine Einspannstelle etwa senkrecht zur Achse des Werkstücktisches verstellbar ist, etwa indem der oberhalb des Werkstücktisches angeordnete Gegenhalter längs einer Horizontalführung verfahrbar und festklemmbar ist.

Der Dorn selbst wird vorteilhaft zwischen seinen beiden Einspannstellen durch zwei Kugeln zentriert, von denen die eine federnd angepreßt wird, damit die beim Schrägstellen des Dornes eintretende Erniedrigung seiner oberen Einspannstelle relativ zum Gegenhalter kompensiert wird.

In denjenigen Fällen, wo absolute Übereinstimmung mit der Verzahnungstheorie von Kegelrädern verlangt wird, kann in Weiterbildung der Erfindung der das Werkzeug tragende Schlitten zusätzlich zu seiner Hubbewegung eine mit der Wälzbewegung korrespondierende, hin und hergehende Schwenkbewegung um eine die Werkstück-Tischachse senkrecht schneidende, als Planradachse fungierende Schwenkachse durchführen. Diese Schwenkbewegung wird zweckmäßig in der Form realisiert, daß man den Werkzeugschlitten verschiebbar auf einem Träger lagert, der seinerseits schwenkbar am Ständer bzw. am Maschinenbett gelagert ist.

Durch die hin und hergehende Schwenkbewegung des Werkzeugschlittens, die mit der rotatorischen und translatorischen Bewegung des Zahnrades korrespondiert, wird das Werkzeug exakt so bewegt, daß es das virtuelle Erzeugungs-Planrad, wie es in der Verzahnungstheorie von Kegelrädern vorgeschrieben ist, repräsentiert.

Weitere Merkmale und Vorteile der Erfindung ergeben sich aus der nachfolgenden Beschreibung eines Ausführungsbeispieles in Form einer Schleifmaschine; dabei zeigt

Figur 1 eine Seitenansicht auf einen Ausschnitt einer herkömmlichen Schleifmaschine;

Figur 2 eine Seitenansicht auf den gleichen Ausschnitt bei einer erfindungsgemäßen Schleifmaschine;

Figur 3 eine um 90° geklappte Seitenansicht auf den Schleifschlittenträger gemäß Figur 2.

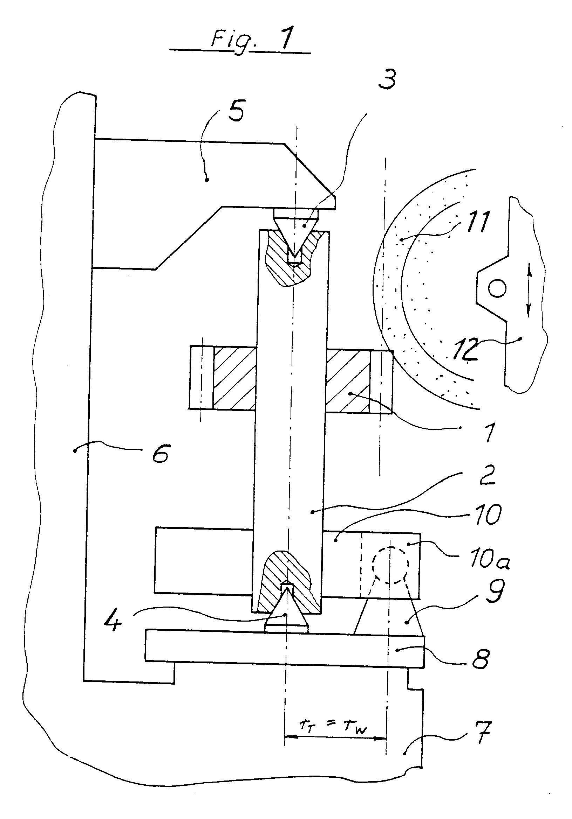

Zur Erläuterung wird zunächst eine herkömmliche Schleifmaschine anhand von Figur 1 beschrieben. Das zu bearbeitende Zahnrad 1 - im vorliegenden Fall ein Stirnrad - ist in an sich bekannter Weise fest mit einem Aufnahmedorn 2 verbunden, der seinerseits an seinen beiden Enden zwischen Spitzen 3 und 4 verspannt ist. Die obere Spitze 3 ist in einem Gegenhalter 5 gelagert, der seinerseits über eine Säule 6 mit einem Schlitten 7 verbunden ist. Dieser Schlitten 7 führt den translatorischen Anteil der zu erzeugenden Wälzbewegung durch, hier also eine Bewegung senkrecht zur Blattebene. Er trägt an seiner Oberseite einen Drehtisch 8, der den rotatorischen Anteil der Wälzbewegung erzeugt und der in seinem Zentrum die zuvor genannte Spitze 4 aufweist und außerdem radial davon distanziert einen oder mehrere Mitnehmer 9. Diese Mitnehmer 9 stehen in spielfreiem Eingriff mit Nuten 10a einer mit dem Dorn 2 verbundenen Mitnehmerscheibe 10. Auf diese Weise wird am Drehtisch 8 eine Wälzbewegung erzeugt und auf das Zahnrad 1 übertragen.

Die Bearbeitung des Zahnrades erfolgt durch eine Schleifscheibe 11, die in einem Hubschlitten 12 gelagert ist, der eine hin und hergehende, vertikale Hubbewegung durchführt.

Mit dieser Maschine können auch Kegelräder mit geringem Kegelwinkel bearbeitet werden. Dazu wird die Hubebene des Schlittens 12 entsprechend dem gewünschten Kegelwinkel im Ausführungsbeispiel also innerhalb der Blattebene - verschwenkt. Es kommt dabei jedoch zu den in der Beschreibungseinleitung genannten Unzulänglichkeiten, weil der Bewegungsablauf nicht der Verzahnungsgeometrie von Kegelrädern gerecht wird.

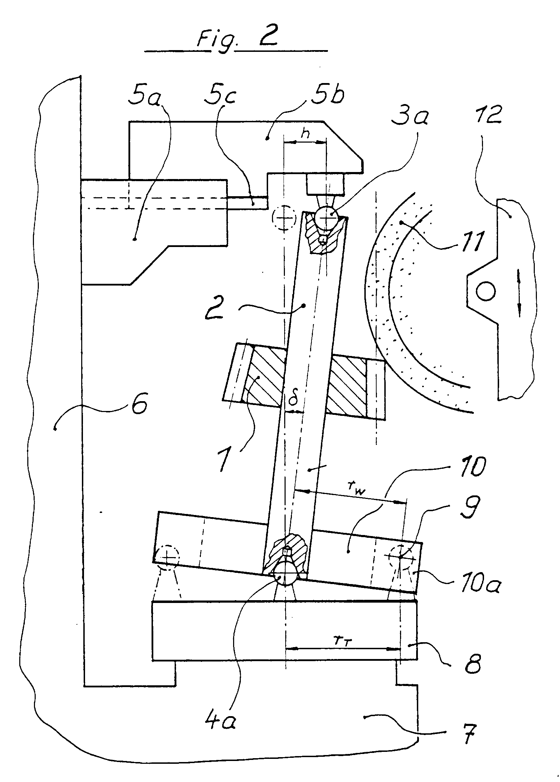

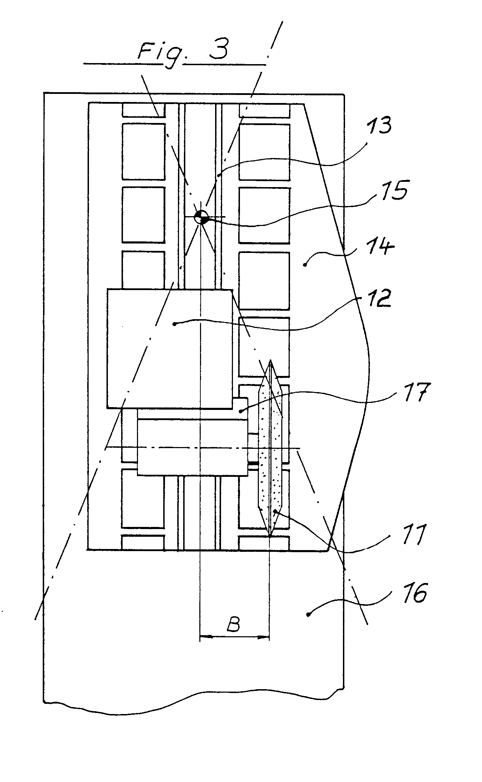

Die erfindungsgemäße Bauform, bei der diese Unzulänglichkeiten beseitigt sind, ist in den Figuren 2 und 3 abgebildet. Einander entsprechende Teile sind dabei mit den gleichen Bezugszeichen versehen.

Im Unterschied zu Figur 1 ist hier der Dorn 2 mit seiner Mitnehmerscheibe 10 aus seiner fluchtenden Position mit der Drehachse des Werkstücktisches 8 herauszuschwenken, so daß zwischen der Achse des Zahnrades 1 und der Achse des Drehtisches 8 der Kegelwinkel $\delta$ eingestellt werden kann. Die Bewegungsebene des Hubschlittens 12 bleibt dabei nach wie vor in der Vertikalen, also in einer Ebene parallel zur Achse des Drehtisches 8.

Die Neigungsverstellung des Dornes 2 erfolgt durch eine Teilung des Gegenhalters 5 in einen an der Säule 6 montierten Grundkörper 5a einerseits und einen Schlitten 5b andererseits, der längs Führungen 5c etwa in der Schleifscheibenebene auf dem Grundkörper 5a verfahrbar und in der gewünschten Position feststellbar ist.

Des weiteren unterscheidet sich die Lagerung des Dornes 2 dadurch, daß anstelle der Spitzen 3 und 4 Kugeln 3a und 4a vorgesehen sind und daß die obere Kugel 3a unter vertikaler Anpressung steht, damit der Dorn auch in ausgelenktem Zustand spielfrei geführt wird.

Die Winkeldifferenz zwischen den Achsen des Zahnrades 1 und des Drehtisches 8 führt dazu, daß bei gleichförmigem Drehantrieb des Tisches 8 die Mitnehmerscheibe 10 wegen der kardanischen Bewegungsübertragung während jeder Umdrehung eine Beschleunigungsphase auf $\omega_{max}$ und eine Verzögerungsphase auf $\omega_{min}$, wenn man die konstante Winkelgeschwindigkeit der Antriebswelle mit $\omega$ bezeichnet.

Um die ungleichförmige Drehung des Zahnrades zu eliminieren, werden die beim Abtrieb sich ergebenden Ungleichmäßigkeiten mit negativem Vorzeichen dem Antrieb des Drehtisches 8 auferlegt. Die Bewegungsgleichung für die Drehung des Tisches 8 lautet also

$\omega$ (t) = $\omega$x (1 + A x cos $\omega$ x t), wobei

$\omega$ Winkelgeschwindigkeit des Werkstücktisches

t Zeitparameter

A Konstante entsprechend Kegelwinkel $\delta$ und konstruktiver Abmessungen

Durch einen derart ungleichförmigen Antrieb des Drehtisches 8, der zweckmäßig durch eine CNC-Steuerung realisiert wird, ist sichergestellt, daß der Dorn 2 mit dem Zahnrad 1 gleichförmig rotiert.

Figur 3 zeigt die Lagerung des Schleifschlittens 12. Er ist längs Führungen 13 auf einem Schleifschlittenträger 14 vertikal verfahrbar gelagert. Darüber hinaus ist der Schleifschlittenträger 14 seinerseits um eine die Achse des Drehtisches 8 senkrecht schneidende Horizontalachse, deren Position zumindest annähernd der Achse des virtuellen Planrades entspricht, schwenkbar am Ständer 16 gelagert. Der Schleifschlittenträger 14 führt um diese Achse eine hin und hergehende kurzhubige Schwenkbewegung durch, die mit der rotatorischen und translatorischen Bewegung des Zahnrades korrespondiert und Teil der gemeinsamen Wälzbewegung ist. Die Spur der Schleifscheibe wird dadurch verlagert, und zwar in dem Maße, wie sich das erzeugende Planrad um seine Achse während des Abwälzvorganges verdreht. Man erhält dadurch eine absolut exakte Kegelverzahnung.

Nimmt man eine Näherung der Zahnform in Kauf oder geht es um das Schleifen gewöhnlicher Stirnräder, so entfällt die Schwenkbewegung des Schleifschlittenträgers 14.

Schließlich weist der Schleifschlitten 12 noch eine Horizontalführung 17 auf. Dadurch kann die Schleifscheibe 11 parallel zu sich selbst aus ihrer fluchtenden Position mit der Zahnradachse herausgefahren und in der gewünschten Position festgestellt werden. In Figur 3 ist die Schleifscheibe um einen Querweg B aus Ihrer Nullstellung herausgefahren. Man benötigt diese Verstellmöglichkeit, wenn schräg verzahnte Kegelräder hergestellt werden sollen.

Zusammenfassend erhält man also durch die vorliegende Erfindung die Möglichkeit, eine Maschine, die bis jetzt nur zur präzisen Bearbeitung von Stirnrädern geeignet ist, durch einfache und kostengünstige Umrüstmaßnahmen auch für die präzise Fertigung von gerad- oder schrägverzahnten Kegelrädern zu verwenden. Insbesondere ist die Maschine für Zahnräder mit größeren Teilkegellängen geeignet, bei denen die bisherige, weniger genaue Fertigung besonders deutlich wird.

**Patentansprüche**

1. Vorrichtung zum wahlweisen Bearbeiten von Stirn- oder Kegel-Zahnrädern mit einem das Zahnrad (1) tragenden Werkstücktisch (8), der neben einer Drehbewegung eine translatorische hin und hergehende Bewegung durchführt und mit einem das Werkzeug (11) tragenden Schlitten (12), der Hubbewegungen entlang den Zahnflanken des Zahnrades (1) durchführt,
dadurch gekennzeichnet,
daß der Werkstücktisch (8) eine winkeleinstellbare Aufnahme (2, 10) für das Zahnrad (1) aufweist, derart, daß die Zahnradachse um einen gewünschten Kegelwinkel (δ) aus der Flucht mit der Werkstück-Tischachse herausschwenkbar und in der herausgeschwenkten Position feststellbar ist.

2. Vorrichtung nach Anspruch 1,
dadurch gekennzeichnet,
daß die winkeleinstellbare Aufnahme (2, 10) für das Zahnrad (1) durch ein Gleichgang-Gelenk drehfest mit dem Werkstücktisch (8) verbunden ist.

3. Vorrichtung nach Anspruch 1,
dadurch gekennzeichnet,
daß die winkeleinstellbare Aufnahme (2, 10) durch ein Gelenk (9, 10a) mit ungleichmäßiger Bewegungsübertragung drehfest mit dem Werkstücktisch (8) verbunden ist und daß Ungleichförmigkeiten der Bewegungsübertragung durch eine CNC-Steuerung des Werkstücktisch-Antriebes kompensiert sind.

4. Vorrichtung nach Anspruch 3,
dadurch gekennzeichnet,
daß die drehfeste Verbindung zwischen den genannten Teilen (8;2) durch am Werkstücktisch (8) angeordnete Kugeln (9) erfolgt, die in passende Nuten (10a) der Aufnahme (2, 10) hineinragen.

5. Vorrichtung nach einem der vorhergehenden Ansprüche, wobei die Aufnahme (2, 10) einen das Zahnrad (1) durchquerenden Dorn (2) aufweist, der nahe seinen beiden Enden eingespannt ist,
dadurch gekennzeichnet,
daß die eine Einspannstelle (3a) etwa senkrecht zur Achse des Werkstücktisches (8) verstellbar ist.

6. Vorrichtung nach Anspruch 5,
dadurch gekennzeichnet,
daß die verstellbare Einspannstelle (3a) durch einen dem Werkstücktisch gegenüberliegenden Schlitten (5b) gebildet ist, der längs einer Horizontalführung (5c) an einem Gegenhalter (5a) verfahrbar und festklemmbar ist.

7. Vorrichtung nach Anspruch 5 oder 6,
dadurch gekennzeichnet,
daß der Dorn (2) zwischen seinen Einspannstellen durch zwei Kugeln (3a, 4a) zentriert ist, von denen die eine federnd angepreßt ist.

8. Vorrichtung nach Anspruch 1,
dadurch gekennzeichnet,
daß der das Werkzeug (11) tragende Schlitten (12) zusätzlich zu seiner Hubbwegung eine hin und hergehende Schwenkbewegung um eine die Werkstück-Tischachse senkrecht schneidende, als Planradachse fungierende Schwenkachse (15) durchführt.

9.  Vorrichtung nach Anspruch 8,
    dadurch gekennzeichnet,
    daß der Werkzeugschlitten (12) zur Realisie-
    rung der vorgenannten Schwenkbewegung ver-
    schiebbar auf einem Träger (14) geführt ist,
    der seinerseits um die Achse (15) schwenkbar
    am Maschinenbett (16) gelagert ist.

10. Vorrichtung nach Anspruch 1,
    dadurch gekennzeichnet,
    daß der Werkzeugschlitten (12) eine Verschiebung des Werkzeuges senkrecht zu seiner
    Hubrichtung gestattet.

Fig. 1

$r_T = r_W$

Fig. 2

Fig. 3

13

15

14

12

17

11

16

B

| | Europäisches Patentamt | **EUROPÄISCHER RECHERCHENBERICHT** | Nummer der Anmeldung |
|---|---|---|---|
| | | | EP 93 10 1984 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 877 150 (W. HÖFFLER) <br> * Zusammenfassung; Abbildungen 3A,5 * <br> --- | 1 | B23F23/12 <br> B23F5/08 |
| A | US-A-2 114 690 (W.E. SYKES) <br> * Seite 2, linke Spalte, Zeile 1 - Zeile 52; Abbildungen 1-4 * <br> --- | 1,2,5,6 | |
| A | US-A-4 872 791 (J.H. CRANKSHAW) <br> --- | | |
| A | DE-C-0 277 514 (F.A. WARD) <br> ----- | | |

**RECHERCHIERTE SACHGEBIETE (Int. Cl.5)**

B23F

Der vorliegende Recherchenbericht wurde für alle Patentansprüche erstellt

| Recherchenort | Abschlußdatum der Recherche | Prüfer |
|---|---|---|
| DEN HAAG | 16 JUNI 1993 | MOET H.J.K. |